# EUROPEAN PATENT APPLICATION

(11) **EP 4 471 931 A1**
(43) Date of publication of application: **04.12.2024**
(21) Application number: 24178011.3
(22) Date of filing: 24.05.2024
(51) Int. Cl.: H01M 10/42, H01M 10/613, H01M 10/6235, H01M 10/643, H01M 10/6551, H01M 10/658, H01M 50/213, H01M 50/222

(54) **BATTERY PACK AND BATTERY PACK HEAT MANAGEMENT APPARATUS**

(30) Priority: 30.05.2023 CN 202310631039
(71) Applicant: Techtronic Cordless GP, Anderson, SC 29621 (US)
(72) Inventor: LEE, Hei Man, Kwai Chung (HK)
(74) Representative: Novagraaf Group

(57) **Abstract**

Battery pack (100) for supplying power to an electric tool comprising a housing (110), defining an internal space of the battery pack; a cell assembly (140), located in the internal space and comprising multiple cells; a circuit board (151), located in the internal space and disposed at one side of the cell assembly (140), a heat management apparatus comprising a thermal isolation plate (170), disposed between the cell assembly (140) and the circuit board (151), and used for reducing the transmission of heat between the cell assembly and the circuit board; and a thermally conductive plate (180), configured to at least partially transmit heat generated by the cell assembly (140) in the internal space to the outside. This ensures heat dissipation functionality while maintaining thermal isolation of the circuit board.

## Description

### Technical Field

The present invention relates to the field of batteries, in particular to a battery pack for an electric tool and a heat management apparatus of the battery pack.

### Background Art

Battery packs commonly seen on the market at present contain multiple cells and a control component arranged adjacent to each other; gaps between adjacent cells and between the control component and cells are small and generally contain no filler, so heat is transmitted across the gaps directly through air.

During use, when one of the cells in such a battery pack overheats or goes on fire/explodes, etc. due to improper operation, ageing or another reason, the heat or flame produced by the cell will generally be transmitted directly through the surrounding air to an adjacently arranged cell or control component (e.g. a control circuit board with a large number of electrical elements arranged thereon), thus rapidly giving rise to continuous burning/explosions inside the battery pack, resulting in a serious accident, with serious consequences. Thus, there is considerable safety risk associated with such an arrangement in which multiple cells are adjacent to the control component and the gaps contain no spacers; for example, combustion and explosions cannot be promptly alleviated or blocked, and therefore rapidly spread within a short time, resulting in larger-scale combustion, explosions and other problems.

Thus, there is a need to provide a battery pack and a heat management apparatus thereof, to at least partially mitigate the abovementioned problem, while ensuring normal heat dissipation functionality of the battery pack.

### Summary of the Invention

An object of the present invention is to provide a battery pack and a battery pack heat management apparatus, to at least partially balance the distribution of heat inside the battery pack, so as to improve thermal isolation and fire prevention functionality between a cell assembly and a control assembly and within the cell assembly while ensuring effective heat dissipation.

To achieve at least the abovementioned object, according to one aspect of the present invention, a battery pack is provided, configured to be able to supply power to an electric tool, the battery pack comprising: a housing, defining an internal space of the battery pack; a cell assembly, located in the internal space and comprising multiple cells; and a circuit board, located in the internal space and disposed at one side of the cell assembly, wherein the battery pack further comprises a heat management apparatus, the heat management apparatus comprising: one or more first thermal isolation plate, disposed between the cell assembly and the circuit board, and used for reducing the transmission of heat between the cell assembly and the circuit board; and one or more thermally conductive plate, configured to at least partially transmit heat generated by the cell assembly in the internal space to the outside.

In some preferred embodiments, the heat management apparatus further comprises one or more second thermal isolation plate disposed between adjacent cells of the cell assembly, for the purpose of reducing the transmission of heat between adjacent cells, wherein the one or more second thermal isolation plate divides the cell assembly into multiple heat generation regions, and the one or more thermally conductive plate is provided for the multiple heat generation regions.

In some preferred embodiments, the one or more first thermal isolation plate is disposed at a side of the cell assembly where the circuit board is provided, and the one or more thermally conductive plate is disposed at another side different from the side where the circuit board and the one or more first thermal isolation plate are provided.

In some preferred embodiments, the one or more first thermal isolation plate and the circuit board are disposed at a top side in a height direction of the cell assembly and extend in a direction substantially parallel to the top side, and the one or more thermally conductive plate is disposed at one or more side among other sides of the cell assembly different from the top side and extend in a direction substantially parallel to said one or more side.

In some preferred embodiments, the one or more thermally conductive plate is disposed at a bottom side in the height direction of the cell assembly, and/or at at least one of two sides of the cell assembly that are opposite one another in a longitudinal direction, and/or at at least one of two sides of the cell assembly that are opposite one another in a transverse direction orthogonal to the longitudinal direction, and/or at a transitional part of a bottom face and a peripheral side face of the cell assembly.

In some preferred embodiments, the heat management apparatus further comprises, corresponding to the position of the one or more thermally conductive plate: one or more ventilation port provided on the housing, and/or one or more fan provided inside the housing at a position between the one or more ventilation port and the one or more thermally conductive plate.

In some preferred embodiments, the multiple cells comprise multiple layers of cells arranged in a height direction, and one or more second thermal isolation plate is provided between adjacent cell layers, the second thermal isolation plate extending in a direction substantially parallel to said cell layers.

In some preferred embodiments, the multiple cells comprise multiple columns of cells arranged in a transverse direction, and one or more second thermal isolation plate is provided between adjacent cell columns, the second thermal isolation plate extending in a direction substantially parallel to said cell columns.

In some preferred embodiments, the cell assembly comprises a first cell set and a second cell set arranged in alignment in a longitudinal direction, the first cell set and second cell set each comprising multiple cells arranged in parallel, and one or more second thermal isolation plate is provided between the first cell set and the second cell set, the second thermal isolation plate extending substantially parallel to longitudinal end faces of the first cell set and second cell set.

In some preferred embodiments, the shape of the cell is cylindrical, and the one or more second thermal isolation plate disposed between the cell layers or between the cell columns is wave-shaped, and comprises one or more depression adapted to the cylindrical circumferential shape of the cell.

In some preferred embodiments, the one or more thermally conductive plate is made of a material with a thermal conductivity greater than that of air.

In some preferred embodiments, the one or more first thermal isolation plate and/or the one or more second thermal isolation plate is made of at least one of an aerogel material and a mica material.

In some preferred embodiments, a cell support for supporting the cell assembly and fixing the positions of the multiple cells in the cell assembly is provided between the housing and the cell assembly, wherein the cell support is made of the same thermally isolating material as the first thermal isolation plate and/or the second thermal isolation plate.

In some preferred embodiments, a first cell support for supporting the first cell set and fixing the positions of the multiple cells in the first cell set, and a second cell support for supporting the second cell set and fixing the positions of the multiple cells in the second cell set, are provided between the housing and the cell assembly, wherein the first cell support and the second cell support are made of the same thermally isolating material as the first thermal isolation plate and/or the second thermal isolation plate.

In some preferred embodiments, the housing is made of a material with a thermal conductivity greater than that of air.

According to another aspect of the present invention, a battery pack heat management apparatus is provided, capable of being used for the battery pack described in any of the above solutions, wherein the heat management apparatus comprises: one or more first thermal isolation plate, disposed between the cell assembly and the circuit board, and used for reducing the transmission of heat between the cell assembly and the circuit board; and one or more thermally conductive plate, configured to at least partially transmit heat generated by the cell assembly in the internal space to the outside.

The above-described battery pack and battery pack heat management apparatus according to the present invention are at least capable of achieving the following beneficial effects: the thermal isolation plate enables effective control or lessening of heat transmission between the cell assembly and the circuit board and/or between the cells of the cell assembly inside the battery pack, so that when some of the cells heat up abnormally or burn/explode, the spread of the combustion/explosions can be slowed down, thus improving fire prevention and thermal isolation functionality; at the same time, the thermally conductive plate allows the heat dissipation functionality of the battery pack to be ensured while improving its fire prevention and thermal isolation functionality, thus managing the balance of heat distribution inside the battery pack.

### Brief Description of the Figures

To better understand the above and other objectives, features, advantages and functions of the present invention, reference may be made to the preferred embodiments shown in the drawings. In the drawings, identical reference signs denote identical components. It should be understood by a person skilled in the art that the drawings are intended to schematically illustrate preferred embodiments of the present invention, without imposing any limitations on the scope of the present invention, and that the various components in the drawings are not drawn to scale.
Fig. 1 is a schematic drawing of the external structure of a battery pack according to a preferred embodiment of the present invention.
Fig. 2 is a schematic drawing of the internal structure of the battery pack shown in Fig. 1.
Fig. 3 is a schematic drawing of the internal structure of the battery pack shown in Fig. 1, with the external structure of the battery pack and some of the electrical elements on the circuit board removed.
Fig. 4 is a schematic drawing of the cell support and cell assembly inside the battery pack shown in Fig. 1, with the first cell support removed to show the first cell set.
Fig. 5 shows a schematic drawing of the internal structure of that side of the first half of the first cell support that is close the cell assembly, according to a preferred embodiment of the present invention.
Figs. 6A - 6D show multiple arrangements of one or more first thermal isolation plate and one or more thermally conductive plate according to preferred embodiments of the present invention.
Figs. 7A - 7C show multiple arrangements of one or more second thermal isolation plate inside the cell assembly according to preferred embodiments of the present invention.

### Key to reference signs:

- 100: Battery pack
- 110: Housing
- 111: Upper housing
- 112: Lower housing
- 120: Connecting part
- 130: Handle part
- 140: Cell assembly
- 141: First cell set
- 142: Second cell set
- 150: Control assembly
- 151: Circuit board
- 152: Collecting part
- 160: Cell support
- 161: First cell support
- 1611: First half of first cell support
- 16111: End sidewall
- 16112: Peripheral sidewall
- 16113: Outside protrusion
- 16114: Inside protrusion
- 16115: Through-hole in end sidewall
- 1612: Second half of first cell support
- 162: Second cell support
- 1621: First half of second cell support
- 1622: Second half of second cell support
- 170: First thermal isolation plate
- 180: Thermally conductive plate
- 190: Second thermal isolation plate

### Detailed Description of Embodiments

Specific embodiments of the present invention are now described in detail with reference to the drawings. The embodiments described here are merely preferred embodiments according to the present invention. A person skilled in the art could conceive of other ways of implementing the present invention on the basis of the preferred embodiments, and such other ways shall likewise fall within the scope of the present invention.

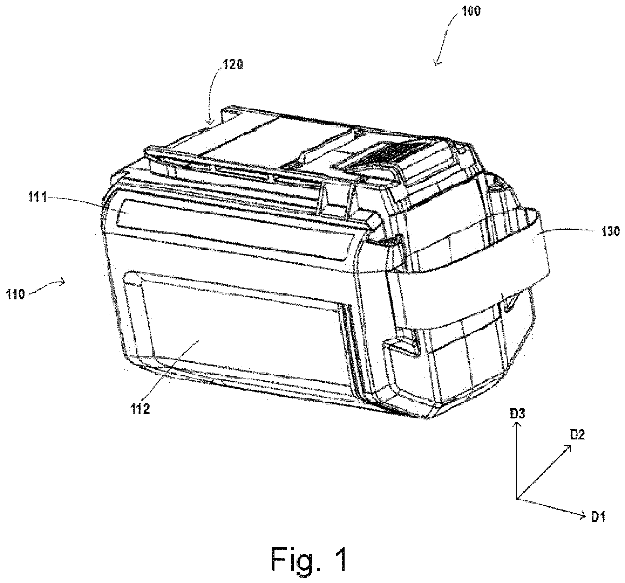

Figs. 1 - 7C show some preferred embodiments of a battery pack, and a heat management apparatus in a battery pack, according to the present invention. First of all, it must be explained that directional and positional terms in the present invention should be understood to mean relative directions and positions, not absolute directions and positions. The directional and positional terms in the present invention may be explained with reference to the exemplary structures shown in Figs. 1 - 7C. For example, the "longitudinal direction" of the cell assembly as mentioned in the present invention may be understood to be direction D1 in the drawings, i.e. parallel to the direction of length extension of the cells; "transverse direction" may be understood to be direction D2 in the drawings, i.e. a direction of horizontal extension orthogonal to the direction of length extension of the cells; and "height direction" may be understood to be direction D3 in the drawings, i.e. a direction of vertical extension orthogonal to the direction of length extension of the cells, wherein directions D1, D2 and D3 are mutually orthogonal in space. The top side and bottom side of the cell assembly as mentioned in the present invention may be understood to be two sides of the cell in the height direction; the front side and rear side may be understood to be two sides of the cell in the longitudinal direction; and the left side and right side may be understood to be two sides of the cell in the transverse direction.

The present invention provides a battery pack. Fig. 1 shows a schematic drawing of the exterior of a battery pack according to a preferred embodiment, the battery pack in the drawing being in a normal placement state. The battery pack 100 comprises a housing 110 substantially in the form of a cuboid, the housing comprising an upper housing 111 and a lower housing 112, the upper and lower housings together defining an internal accommodating space of the battery pack when in an assembled state. The battery pack 100 may further comprise, for example, a handle part 130 to facilitate carrying of the battery pack 100 by a user, and a connecting part 120 for electrically and physically connecting to an electric tool and/or a charging device in order to supply power and/or perform charging. It will be understood that in other embodiments, the battery pack may have a different shape and external structure from the battery pack 100 described above.

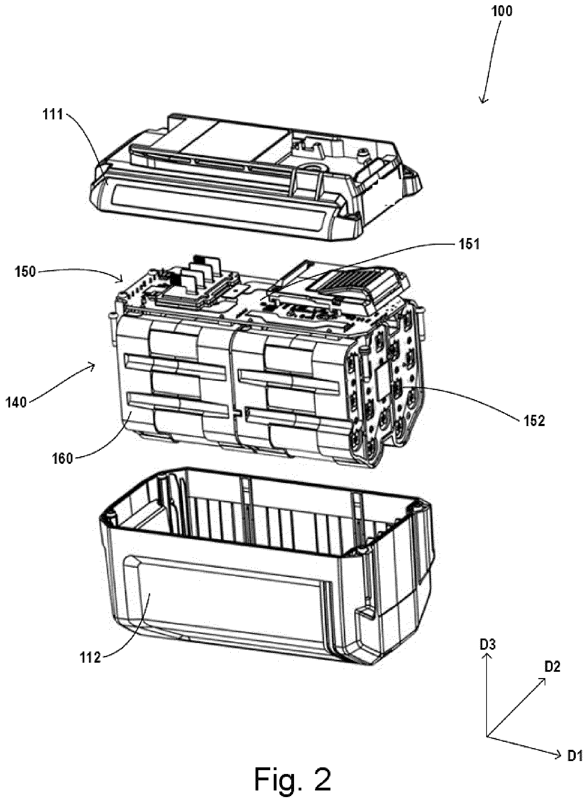

Several different structures are possible in the internal accommodating space of the battery pack 100; Figs. 2 - 4 show the internal structure of the battery pack 100 according to a preferred embodiment of the present invention. Referring to Fig. 2 first, this figure shows a schematic drawing of the internal structure of the battery pack 100 described above. A cell assembly 140 is provided inside the housing of the battery pack 100, the cell assembly comprising multiple cylindrical cells for storing electrical energy, the multiple cells being arranged in such a way that their axes are parallel to each other. It will be understood that the cells may also be cells of another type, such as pouch cells, and may be arranged in a different way in the housing. A control assembly 150 is also provided inside the battery pack, the control assembly comprising a circuit board 151 located at a top side of the cell assembly 140 in a height direction D3, and a collector part 152 located at a front side and/or a rear side of the cell assembly 140 in a longitudinal direction D1, the collector part being used to collect current from inside the cell assembly 140 to the circuit board 151. The circuit board 151 is accommodated in the upper housing 111 and extends substantially parallel to the top side of the cell assembly 140, and multiple electrical elements for controlling the battery pack 100 are arranged on the circuit board. It will be understood that in other embodiments, the circuit board is not limited to being arranged on the top side of the cell assembly; those skilled in the art could, as required, arrange it at any position in the housing, for example at any side part of the cell assembly, and have it extend in a different direction. Continuing to refer to Fig. 2, further preferably, a cell support 160 for supporting the cell assembly 140 and fixing the positions of the multiple cells is also provided between the housing of the battery pack 100 and the cell assembly 140, the cell support being disposed at two ends in the longitudinal direction D1 of the cell assembly, and at least partially surrounding the cell assembly.

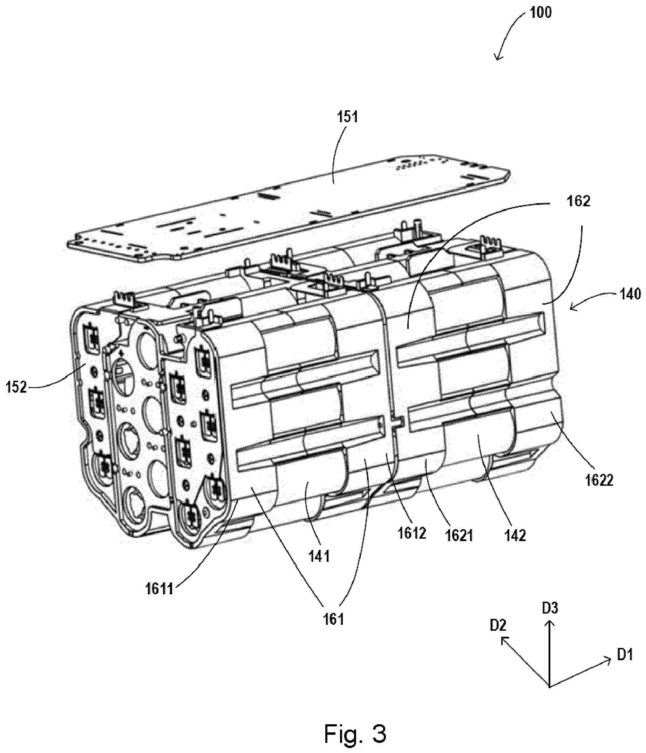

Further, referring to Fig. 3, this figure shows the internal structure of the battery pack 100 (for clarity, some of the structure is not shown, and the circuit board 151 and the cell assembly 140 are in a separated state). In a preferred embodiment, the cell assembly 140 comprises a first cell set 141 and a second cell set 142 arranged side by side in alignment in the longitudinal direction D1, the first and second cell sets each containing multiple layers of cells arranged in the height direction D3 and multiple columns of cells arranged in a transverse direction D2. Further preferably, the cell support 160 comprises a first cell support 161 for supporting the first cell set 141 and a second cell support 162 for supporting the second cell set 142, the first and second cell supports being respectively disposed at the two longitudinal ends of the corresponding first and second cell sets. For example, the first cell support 161 comprises a first half 1611 and a second half 1612 disposed opposite each other in the longitudinal direction, and similarly, the second cell support 162 comprises a first half 1621 and a second half 1622 disposed opposite each other in the longitudinal direction, wherein the first halves can at least partially engage with the second halves, to at least partially support the first and second cell sets in an enclosed space defined thereby.

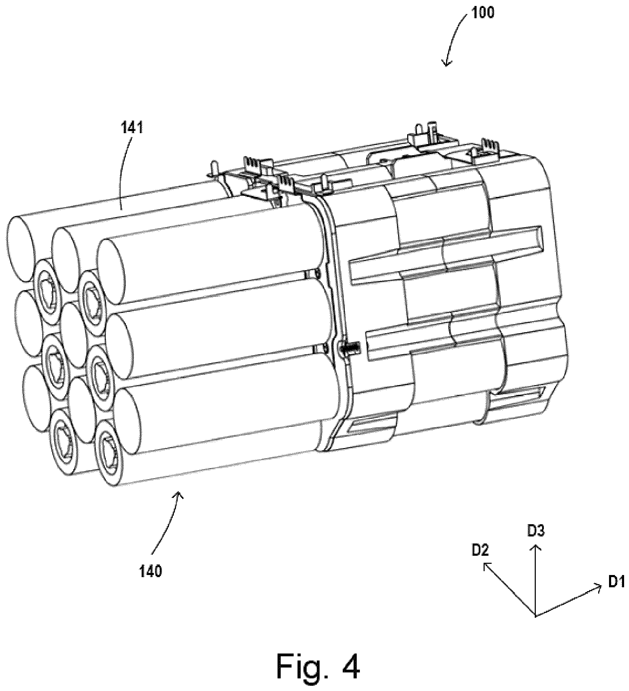

Further, the specific structure of the cell assembly 140 and the corresponding cell support 160 can be seen in Fig. 4 (in which some of the structure is not shown, and the first cell support 161 has been removed to clearly show the first cell set 141). Preferably, in this embodiment, multiple layers of cells inside the cell assembly 140 are arranged in an offset manner in the transverse direction D2. As shown in Fig. 4, taking the first cell set 141 as an example, firstly, in the height direction D3, the first cell counted from the left in the first layer of cells in the top-to-bottom direction is not transversely aligned with the first cell counted from the left in the second layer of cells, instead being transversely aligned with the first cell counted from the left in the third layer of cells; in the transverse direction, the first cell counted from the left in the second layer of cells is located between the first and second cells counted from the left in the first layer of cells; the cells in the other layers are arranged in a similar manner, also being offset relative to each other. Similar to the way in which the layers of cells are arranged as described above, the multiple columns of cells inside the cell assembly are also arranged so as to be offset relative to each other in the height direction D3. Such an offset arrangement can make the structure of the cell assembly 140 compact, minimizing the volume of the battery pack, and allowing as many cells as possible to be arranged in a space of a specific volume.

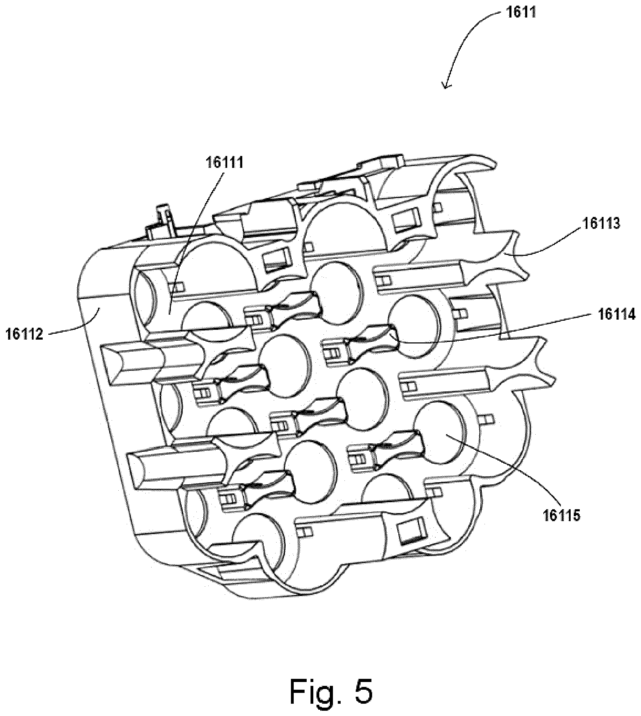

Further, Fig. 5 shows a cell support according to a preferred embodiment, wherein only the first half 1611 of the first cell support 161 is shown as an example. As shown in the figure, the first half 1611 comprises an end sidewall 16111 perpendicular to the longitudinal direction D1 and a peripheral sidewall 16112 extending forwards in the longitudinal direction from the end sidewall. The end sidewall and peripheral sidewall at least partially surround a rear side end of the first cell set 141 in the longitudinal direction D1. The first half 1611 further comprises multiple inside protrusions 16114 and multiple outside protrusions 16113 extending forwards in the longitudinal direction from an inner surface on that side of the end sidewall 16111 which is close to the first cell set 141, wherein the inside and outside protrusions have shapes adapted to the cylindrical shape of the cells, and are used for supporting the corresponding cells. The outside protrusions 16113 are not only able to support the cells, but can also engage with corresponding outside protrusions on the second half 1612, to at least partially define a space for accommodating the first cell set. The end sidewall 16111 is also provided with multiple through-holes 16115 through which the cells can pass, the through-holes allowing a longitudinal end of each cell to be exposed therethrough. It will be understood that the structure of the second half 1612 of the first cell support 161 is similar to that of the first half 1611 described above, and is preferably a mirror image of the first half, and the structure of the first and second halves 1621, 1622 of the second cell support 162 is preferably similar to that of the first cell support 161 described above.

It will be understood that the above description of the arrangement of the cell assembly 140 and the structure of the cell support 160 is merely exemplary and not limiting, so should not be construed as limiting the scope of protection of the present invention. Those skilled in the art may adjust the arrangement of the cell assembly according to actual needs, e.g. provide only one cell set, and/or configure the axial directions of the cells of the cell set to be parallel to the transverse direction D2 instead of being parallel to the longitudinal direction D1 as described above, etc.; or choose different numbers of cell supports with different structures to support and fix the cell assembly, or even not use any cell support, and only use some fixing elements or adhesive material to fix the cell assembly.

Further, in certain situations, for example in the case of improper operation or cell ageing, one or more cell in the cell assembly 140 might overheat or burn, or even explode, etc. Thus, in order to at least partially reduce or prevent the transmission of heat from such a cell through the air around it to other cells or other components, in particular the circuit board with multiple electrical elements disposed thereon, which would result in a continuous rise in temperature or combustion of the battery pack, a means for fire prevention and thermal isolation, such as a thermal isolation plate, must be provided in the battery pack, to at least partially reduce or prevent further spread of such combustion/explosion. At the same time, a heat dissipation means such as a thermally conductive plate must also be provided in the battery pack, to ensure that sufficient heat dissipation functionality can be ensured while ensuring fire prevention and thermal isolation functionality inside the battery pack. Thus, the present invention provides a battery heat management apparatus in a battery pack, for the purpose of at least partially balancing heat dissipation functionality and fire prevention and thermal isolation functionality inside the battery pack.

Specifically, the heat management apparatus of the battery pack has one or more first thermal isolation plate, disposed between the cell assembly and the circuit board, for the purpose of reducing the transmission of heat between the cell assembly and the circuit board; and one or more thermally conductive plate, configured to at least partially transmit heat generated by the cell assembly in the internal space to the outside. As a result of being simultaneously provided with the thermal isolation plate and the thermally conductive plate, this heat management apparatus of the present invention allows the battery pack to respectively realize fire prevention and thermal isolation functionality and heat dissipation functionality in various directions, thus effectively managing internal heat distribution.

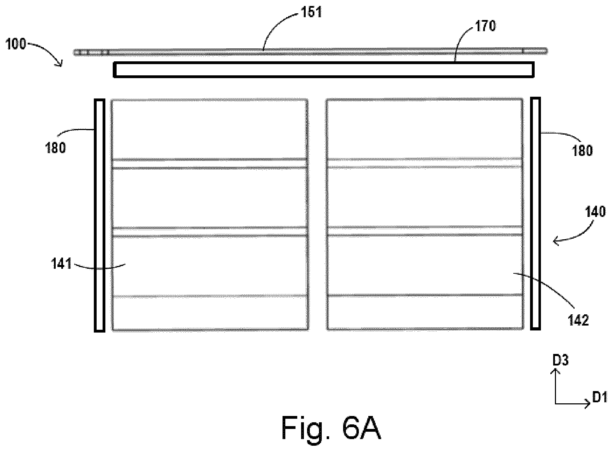

Figs. 6A - 6D show some exemplary optional arrangements of one or more thermally conductive plate and one or more first thermal isolation plate according to preferred embodiments of the present invention, wherein, for clarity, only the cell assembly 140, the circuit board 151, the thermally conductive plate and the first thermal isolation plate are shown schematically in the figures; other components are not shown.

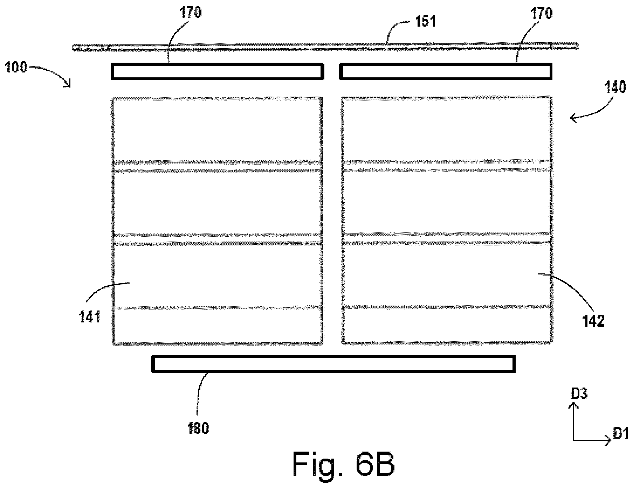

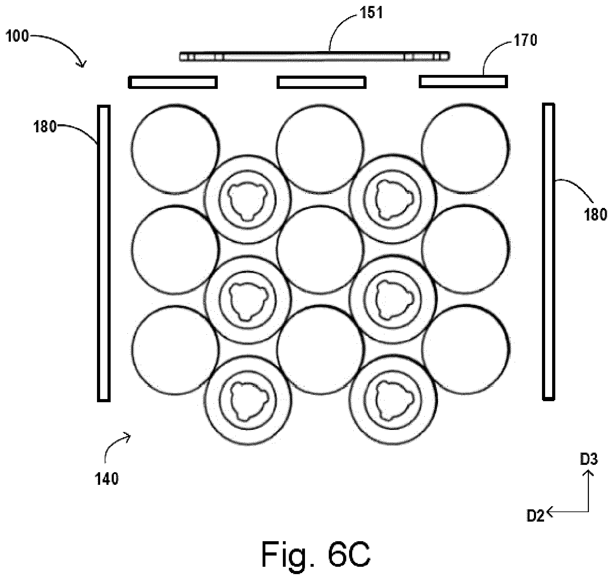

As shown in Figs. 6A - 6D, in the battery pack 100, a first thermal isolation plate 170 is provided between the circuit board 151 and the top side of the cell assembly 140 in the height direction D3; the thermal isolation plate may be a single thermal isolation plate extending in a direction substantially parallel to the circuit board (as shown in Fig. 6A), i.e. extending continuously in the longitudinal direction D1 and the transverse direction D2, and provides at least partial coverage between the cell assembly and the circuit board, to at least partially reduce or prevent the transmission of heat therebetween. It will be understood that the first thermal isolation plate 170 may also be provided discontinuously. For example, two first thermal isolation plates 170 may be provided in the longitudinal direction D1 (as shown in Fig. 6B), in such a way as to respectively cover top sides of the first cell set 141 and the second cell set 142, to respectively reduce or prevent the transmission of heat from the first and second cell sets upwards to the circuit board 151; multiple first thermal isolation plates 170 corresponding to multiple cells may also be provided in the transverse direction (as shown in Fig. 6C), to respectively reduce or prevent the transmission of heat from the corresponding cells to the circuit board 151. In addition, it will be understood that the first thermal isolation plate 170 of the present invention may be provided at an inner side of the cell support 160 close to the cell assembly 140, or at an outer side close to a casing, or the first thermal isolation plate 170 may be provided at both sides of the cell support. It will be understood that those skilled in the art may, according to actual needs, arbitrarily change the number, arrangement, extension direction and coverage area, etc. of the first thermal isolation plate 170 disposed between the circuit board 151 and the cell assembly 140, as long as it can at least partially reduce or prevent the transmission of heat from the cell assembly to the circuit board.

Further, one or more thermally conductive plate is also provided in the battery pack, for the purpose of at least partially transmitting heat from the cell assembly 140 to the outside.

Specifically, optionally as shown in Fig. 6A, one or more thermally conductive plate 180 is respectively provided at front and rear sides of the cell assembly 140 in the longitudinal direction D1, the thermally conductive plates extending substantially parallel to the front and rear sides, and being able to transmit heat of the cell assembly 140 from the front and rear sides respectively to the outside of the cell assembly 140 and the battery pack 100. It will be understood that the number of thermally conductive plate(s) disposed at each of the front and rear sides may be one or more, and the thermally conductive plate may be continuous or discontinuous - for example, only one thermally conductive plate 180 extending continuously perpendicular to the longitudinal direction D1 may be provided at each side; or multiple independent thermally conductive plates 180 may be provided at each side at positions corresponding to the through-holes 16114 of the cell support, so as to conduct heat at the part of the cell that is exposed through the through-hole; such a structure helps to save material and lowers space requirements. In addition, the thermally conductive plate may be provided at only one of the front and rear sides. Those skilled in the art may provide different numbers of differently arranged thermally conductive plates 180 according to actual needs.

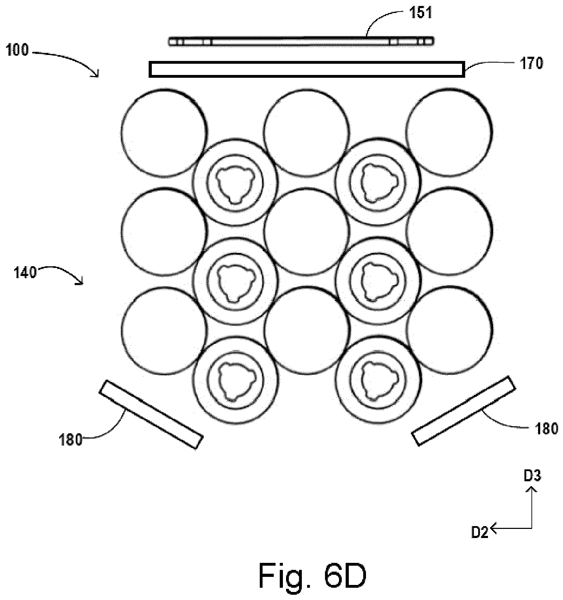

Optionally, as shown in Fig. 6B, a thermally conductive plate 180 extending substantially parallel to the bottom side of the cell assembly 140 may be provided at the bottom side, so as to allow the cell assembly 140 to transmit heat out of the cell assembly and the battery pack in a substantially downward direction through the thermally conductive plate 180. Optionally, as shown in Fig. 6C, thermally conductive plates 180 may also be provided at left and right sides of the cell assembly 140 in the transverse direction D2, and extend parallel to the left and right sides, so as to allow heat to be transmitted out of the cell assembly in the left and right directions through the thermally conductive plates. Furthermore, optionally, as shown in Fig. 6D, one or more thermally conductive plate 180 may also be provided close to transitional parts where the left and right sides are connected to the bottom side, the thermally conductive plate extending substantially parallel to the transitional part, so as to allow heat to be transmitted out of the cell assembly 140 substantially in an oblique downwards direction.

It will be understood that, similar to the configuration of the thermally conductive plates described with reference to Fig. 6A, the number of thermally conductive plate(s) 180 respectively provided at the bottom side, the left and right sides and/or close to the transitional parts where the left and right sides meet the bottom side in Figs. 6B - 6D may also be one or more, and the thermally conductive plate may be provided continuously or discontinuously. Those skilled in the art may similarly adjust the arrangement, number, extension direction and coverage area, etc. of the thermally conductive plates as required. Furthermore, it will be understood that, similar to the first thermal isolation plate 170, the thermally conductive plate 180 of the present invention may also be provided at the inner side and/or outer side of the cell support 160 as required.

In a further preferred embodiment, in order to further improve heat dissipation from the battery pack 100, the heat management apparatus may also comprise, corresponding to the position of the one or more thermally conductive plate 170, one or more ventilation port provided on the housing 110, and/or one or more fan provided inside the housing 110 at a position between the one or more ventilation port and the corresponding one or more thermally conductive plate. Such a combined configuration of the thermally conductive plate, the ventilation port and/or the fan can further transmit heat of the cell assembly 140 to the outside from the corresponding side where the thermally conductive plate is provided, to improve the heat dissipation effect thereof. Further preferably, the battery pack housing itself may also be made of a thermally conductive material, so as to better dissipate heat from the components therein.

In a further preferred embodiment, the thermally conductive plate and/or the first thermal isolation plate has a shape adapted to the shape of the corresponding side or corresponding part where it is disposed. Further preferably, the thermally conductive plate and/or first thermal isolation plate is made of a flexible material. Shape adaption and/or the use of flexible material can achieve better fitting between the thermally conductive plate and/or the first thermal isolation plate and the corresponding side or part that it contacts or is close to, so as to correspondingly improve the heat dissipation effect and/or the fire prevention and thermal isolation effect.

Further preferably, the heat management apparatus of the present invention further comprises one or more second thermal isolation plate disposed between adjacent cells of the cell assembly, for the purpose of reducing the transmission of heat between adjacent cells, wherein the one or more second thermal isolation plate divides the cell assembly into multiple heat generation regions, and one or more thermally conductive plate is provided for the multiple heat generation regions. Providing such a second thermal isolation plate inside the cell assembly enables the battery pack of the present invention to thermally isolate the cells inside each cell assembly from each other more effectively, and at the same time, providing thermally conductive plates for the multiple heat generation regions separated by the second thermal isolation plate can improve the heat dissipation functionality of each region more effectively.

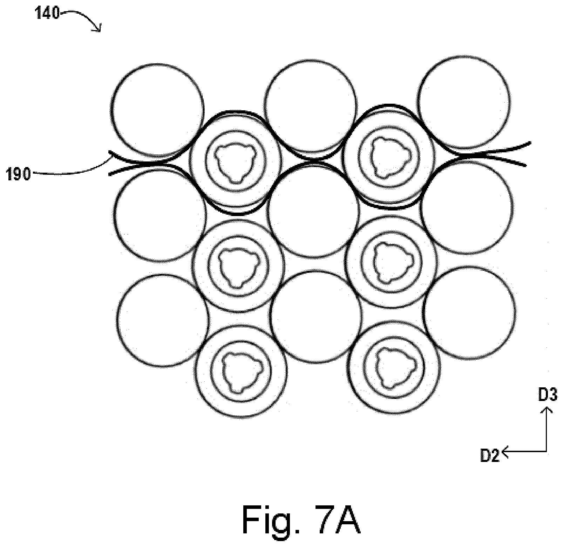

Figs. 7A - 7C show some exemplary optional arrangements of one or more second thermal isolation plate according to preferred embodiments of the present invention, wherein, for clarity, only the cell assembly 140 and the second thermal isolation plate 190 are shown schematically; other components in the battery pack are not shown.

Firstly, referring to Fig. 7A, this figure is a schematic drawing of the cell assembly 140 viewed in the longitudinal direction D 1. Among the multiple layers of cells of the cell assembly 140, one or more second thermal isolation plate 190 is arranged between each pair of layers of cells (only the second thermal isolation plates 190 between the first and second layers and between the second and third layers of cells in the top-to-bottom direction are shown schematically in the figure), the second thermal isolation plate extending in a direction substantially parallel to the cell layer, i.e. extending in the longitudinal direction D1 and transverse direction D2. Further preferably, in this embodiment, since the multiple layers of cells are arranged in the offset manner described above, the second thermal isolation plate 190 has a wave shape, comprising one or more depressions adapted in shape to the cylindrical cells in two adjacent layers, and is thus able to tightly fit multiple cells when disposed in a tightly arranged cell assembly, to achieve a better fire prevention and thermal isolation effect. It will be understood that the one or more second thermal isolation plate 190 may extend continuously or be provided discontinuously; for example, between two adjacent layers of cells, two second thermal isolation plates may be provided side by side in alignment in the longitudinal direction D1, one of them being located between two adjacent layers of cells in the first cell set 141, and the other being located between two adjacent layers of cells in the second cell set 142. Preferably, in such a configuration shown in Fig. 7A, the one or more second thermal isolation plate 190 may be at least partially disposed between the multiple outside protrusions 16113 and/or multiple inside protrusions 16114 of the cell support 160 and the corresponding cells, such that the second thermal isolation plate 190 tightly fits the cells and the protrusions, to achieve a better thermal isolation effect.

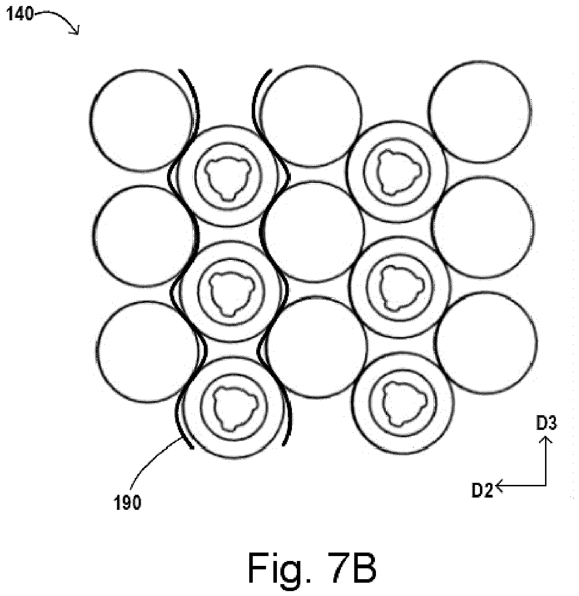

Referring to Fig. 7B, in this figure, among the multiple columns of cells of the cell assembly 140, one or more second thermal isolation plate 190 is arranged between each pair of columns of cells (only the second thermal isolation plates 190 between the first and second columns and between the second and third columns of cells in the left-to-right direction are shown schematically in the figure), the thermal isolation plate extending in a direction substantially parallel to the cell column, i.e. extending in the longitudinal direction D1 and height direction D3. Similar to the second thermal isolation plate 190 in the embodiment described with reference to Fig. 7A, the second thermal isolation plate in Fig. 7B may also be wave-shaped, and may also be provided continuously or discontinuously.

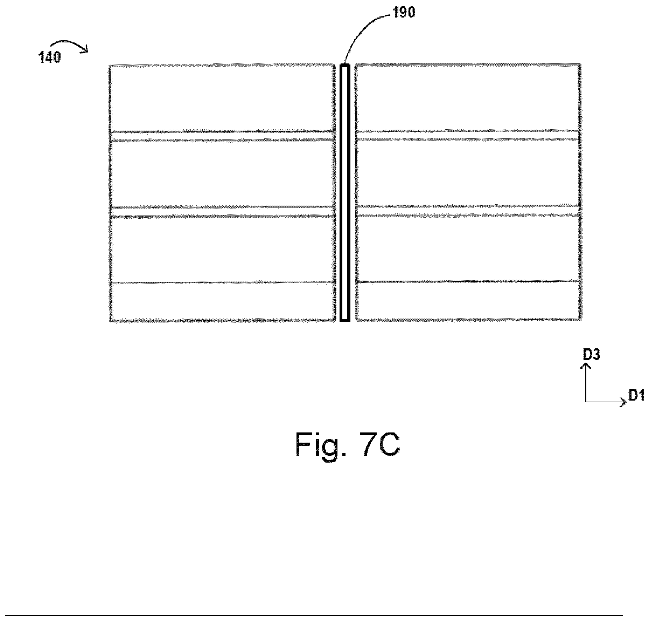

Referring to Fig. 7C, this figure is a schematic drawing of the cell assembly 140 viewed in the transverse direction D2. One or more second thermal isolation plate 190 is provided between the first cell set 141 and the second cell set 142, to at least partially reduce or prevent the transmission of heat between the first cell set 141 and the second cell set 142. It will be understood that the second thermal isolation plate 190 may be continuous or discontinuous - for example, only one thermal isolation plate 190 extending continuously perpendicular to the longitudinal direction D1 may be provided; or multiple mutually independent second thermal isolation plates 190 may be provided at positions corresponding to the through-holes 16114 on the corresponding half of the cell support, so as to provide thermal isolation at the part of the cell that is exposed through the through-hole; such a structure helps to save material and lowers space requirements.

In addition, in other preferred embodiments, multiple independent second thermal isolation plates 190 extending substantially as strips may be provided only between those parts of each pair of adj acent cells among the multiple cells that are closest to each other circumferentially.

It will be understood that the arrangements of one or more second thermal isolation plate 190 set out above are exemplary, and do not limit the scope of protection of the present invention, and various arrangements may be combined with each other; moreover, other arrangements conceivable by those skilled in the art likewise fall within the scope of protection of the present invention. Those skilled in the art may choose one or more arrangement and/or a combination of various arrangements as required, taking into account the thermal isolation effect and the amounts of materials used.

Further preferably, the thermally conductive plate 180 described above is made of a thermally conductive material with a thermal conductivity greater than that of air.

Further preferably, the first thermal isolation plate 170 and the second thermal isolation plate 190 described above are made of a thermally isolating material with a thermal conductivity less than that of air, e.g. an aerogel material and mica material.

In a further preferred embodiment, at least a part of the cell support 160 may also act as a thermal isolation component, i.e. be made of the same thermally isolating material as the first thermal isolation plate 170 and/or second thermal isolation plate 190, to further improve the fire prevention and thermal isolation effect between the cell assembly and the circuit board 151 and between the cells. It must be noted that in this case, the cell support 160 cannot completely surround the cell assembly 140; it is at least necessary to leave a heat dissipating opening, etc. at a position corresponding to a corresponding side or part where the thermally conductive plate 180 is disposed, so as to at least ensure effective heat dissipation from the battery pack.

It should be understood that the various arrangements of the one or more first thermal isolation plate 170, one or more thermally conductive plate 180 and/or one or more second thermal isolation plate 190 described above may be adjusted or combined with each other. The scope of protection of the present invention is not limited to the various embodiments set out above, and those skilled in the art may make a choice according to actual needs, as long as it can balance the fire prevention/thermal isolation and heat dissipation functionality of the battery pack.

It must be explained that the above-described embodiments of the present invention may be combined and/or modified in various ways, and the results of such combinations and/or modifications should also be regarded as embodiments of the present invention. The above description of various embodiments of the present invention is provided to a person of ordinary skill in the relevant art for descriptive purposes. The present invention is not intended to be exclusive or limited to a single disclosed embodiment. Based on the above, a person of ordinary skill in the art as taught above will understand various substitutes for and variants of the present invention. Therefore, although some alternative embodiments have been specifically described, a person of ordinary skill in the art will understand, or develop with relative ease, other embodiments. The present invention is intended to include all substitutes for, alterations to, and variants of the present invention described herein, as well as other embodiments falling within the spirit and scope of the present invention described above.

## Claims

1. Battery pack (100), configured to be able to supply power to an electric tool, the battery pack (100) comprising:
a housing (110), defining an internal space of the battery pack;
a cell assembly (140), located in the internal space and comprising multiple cells;
a circuit board (151), located in the internal space and disposed at one side of the cell assembly (140),
**characterized in that** the battery pack further comprises a heat management apparatus, the heat management apparatus comprising:
one or more first thermal isolation plate (170), disposed between the cell assembly (140) and the circuit board (151), and used for reducing the transmission of heat between the cell assembly and the circuit board; and
one or more thermally conductive plate (180), configured to at least partially transmit heat generated by the cell assembly (140) in the internal space to the outside.

2. Battery pack (100) according to Claim 1, **characterized in that** the heat management apparatus further comprises one or more second thermal isolation plate (190) disposed between adjacent cells of the cell assembly (140), for the purpose of reducing the transmission of heat between adjacent cells, wherein the one or more second thermal isolation plate divides the cell assembly (140) into multiple heat generation regions, and the one or more thermally conductive plate (180) is provided for the multiple heat generation regions.

3. Battery pack (100) according to Claim 1, **characterized in that** the one or more first thermal isolation plate (170) is disposed at a side of the cell assembly (140) where the circuit board (151) is provided, and the one or more thermally conductive plate (180) is disposed at another side different from the side where the circuit board (151) and the one or more first thermal isolation plate (170) are provided.

4. Battery pack (100) according to Claim 3, **characterized in that** the one or more first thermal isolation plate (170) and the circuit board (151) are disposed at a top side in a height direction (D3) of the cell assembly (140) and extend in a direction substantially parallel to the top side, and the one or more thermally conductive plate (180) is disposed at one or more side among other sides of the cell assembly different from the top side and extend in a direction substantially parallel to said one or more side.

5. Battery pack (100) according to Claim 4, **characterized in that** the one or more thermally conductive plate (180) is disposed at a bottom side in the height direction (D3) of the cell assembly (140), and/or at at least one of two sides of the cell assembly that are opposite one another in a longitudinal direction (D 1), and/or at at least one of two sides of the cell assembly that are opposite one another in a transverse direction (D2) orthogonal to the longitudinal direction (D1), and/or at a transitional part of a bottom face and a peripheral side face of the cell assembly.

6. Battery pack (100) according to Claim 1, **characterized in that** the heat management apparatus further comprises, corresponding to the position of the one or more thermally conductive plate (180): one or more ventilation port provided on the housing, and/or one or more fan provided inside the housing at a position between the one or more ventilation port and the one or more thermally conductive plate.

7. Battery pack (100) according to Claim 2, **characterized in that** the multiple cells comprise multiple layers of cells arranged in a height direction (D3), and one or more second thermal isolation plate (190) is provided between adjacent cell layers, the second thermal isolation plate extending in a direction substantially parallel to said cell layers; or the multiple cells comprise multiple columns of cells arranged in a transverse direction (D2), and one or more second thermal isolation plate (190) is provided between adjacent cell columns, the second thermal isolation plate extending in a direction substantially parallel to said cell columns.

8. Battery pack (100) according to Claim 2, **characterized in that** the cell assembly comprises a first cell set (141) and a second cell set (142) arranged in alignment in a longitudinal direction (D1), the first cell set and second cell set each comprising multiple cells arranged in parallel, and one or more second thermal isolation plate (190) is provided between the first cell set and the second cell set, the second thermal isolation plate extending substantially parallel to longitudinal end faces of the first cell set and second cell set.

9. Battery pack (100) according to Claim 7, **characterized in that** the shape of the cell is cylindrical, and the one or more second thermal isolation plate (190) disposed between the cell layers or between the cell columns is wave-shaped, and comprises one or more depression adapted to the cylindrical circumferential shape of the cell.

10. Battery pack (100) according to Claim 1, **characterized in that** the one or more thermally conductive plate (180) is made of a material with a thermal conductivity greater than that of air.

11. Battery pack (100) according to Claim 2, **characterized in that** the one or more first thermal isolation plate (170) and/or the one or more second thermal isolation plate (190) is made of at least one of an aerogel material and a mica material.

12. Battery pack (100) according to Claim 2, **characterized in that** a cell support (160) for supporting the cell assembly (140) and fixing the positions of the multiple cells in the cell assembly is provided between the housing (110) and the cell assembly (140), wherein the cell support (160) is made of the same thermally isolating material as the first thermal isolation plate (170) and/or the second thermal isolation plate (190).

13. Battery pack according to Claim 8, **characterized in that** a first cell support (161) for supporting the first cell set (141) and fixing the positions of the multiple cells in the first cell set, and a second cell support (162) for supporting the second cell set (142) and fixing the positions of the multiple cells in the second cell set, are provided between the housing (110) and the cell assembly (140), wherein the first cell support and the second cell support are made of the same thermally isolating material as the first thermal isolation plate (170) and/or the second thermal isolation plate (190).

14. Battery pack (100) according to Claim 1, **characterized in that** the housing (110) is made of a material with a thermal conductivity greater than that of air.

15. Battery pack heat management apparatus, capable of being used for the battery pack (100) according to any one of Claims 1 - 14, **characterized in that** the heat management apparatus comprises:
one or more first thermal isolation plate (170), disposed between the cell assembly (140) and the circuit board (151), and used for reducing the transmission of heat between the cell assembly and the circuit board; and
one or more thermally conductive plate (180), configured to at least partially transmit heat generated by the cell assembly (140) in the internal space to the outside.
